# EUROPEAN PATENT APPLICATION

(11) **EP 1 598 172 A1**
(43) Date of publication of application: **23.11.2005**
(21) Application number: 04252887.7
(22) Date of filing: 18.05.2004
(51) Int. Cl.: B29D 7/01

(54) **Perforated elastic sheet**

(71) Applicant: Innovative Elastics Ltd., Limerick (IE)
(72) Inventor: Curtin, Patrick J., Johnson City, Tennessee 37604 (US)
(74) Representative: Jones, Helen M.M.

(57) **Abstract**

An elastic sheet (1) is treated to provide an array of perforations (2) through it and so provide a breathable elastic sheet.

The elastic sheet (1) can be perforated in a variety of ways. The perforations (2) may be formed by ablation using a laser beam or by penetrating the sheet with an array of hot or cold needles, or by using a water jet.

The resulting breathable elastic tape sheet may be slit to form a tape which may typically be used in diapers and adult incontinence products, wound dressings, medical bandages, in knitted and woven textile garments and products and, in particular, when sewn around openings in garments or fitted in hems.

## Description

There are a number of ways of making elastic threads and tapes for the textile industry. These include:-
(i) extrusion of fine elastic threads from a natural rubber latex;
(ii) extrusion of fine elastic threads from a synthetic rubber emulsion based on polychloroprene, polyisoprene, styrene butadiene polymers and blends of such emulsions;
(iii) hot melt extrusion of polyurethane based spandex fibres such as Lycra (Registered Trademark);
(iv) calendering of rubber sheets which are subsequently cut into fine threads; and,
(v) calendering of rubber sheets which are subsequently cut into elastic tapes.

Such elastic threads and tapes are used in non-woven and woven textile industries in a variety of ways. In the woven and knitted textile industry fine elastic threads, which may be covered with textile fibres such as nylon, cotton or polyester, are usually braided, woven or knitted into narrow elastic fabrics. Such fabrics are then enclosed in a hem of material or are secured around an opening in a garment for example, to form a waistband. Such narrow elastic fabrics are comfortable and breathable but are also too expensive for many applications especially those in the disposable, non-woven textile industry including such things as diapers and adult incontinence products. In such products elastic tapes are typically used which are covered by a thin layer of non-woven fabric. Elastic tapes enclosed in hems of material are also used in the woven and knitted industry.

When using elastic tapes of 20 mm or wider perspiration and heat build up can cause discomfort and heat rash. It would be desirable to overcome this while still providing an inexpensive elastic material.

According to this invention an elastic sheet is treated to provide an array of perforations through it and so provide a breathable elastic sheet.

The elastic sheet may be treated to provide the perforations before, during, or after a slitting process to form elastic tapes from the sheet. The resulting breathable elastic tape may typically be used in diapers and adult incontinence products, wound dressings, medical bandages, in knitted and woven textile garments and products and, in particular, when sewn around openings in garments or fitted in hems.

The elastic material from which the sheet is made may be a natural or a synthetic rubber or thermoplastic elastomer. These materials include vulcanised natural rubber, synthetic polyisoprene, synthetic nitrile polymers, ethylene propylenediene rubber (EPDM) based polymers, and polybutadiene polymer. A particularly preferred synthetic rubber typically contains 10 to 20% of styrene butadiene polymer and 90 to 80% of polyisoprene rubber by weight. Such material may be fully crosslinked by sulphur or electron beam crosslinking before perforation.

Typically the sheet elastic material has the following properties; an elongation to break of 550 - 800%; a tensile strength of 10 - 12 MPa and a hardness of 40 - 60 Shore. A material with such properties is good for the applications outlined above. A typical elastic sheet to be used as an elastic tape has a gauge or thickness in a range of 0.05 mm to 0.3 mm and a typical preferred thickness is 0.08 mm (80 µm).

The elastic sheet can be perforated in a variety of ways. The perforations may be formed by ablation using a laser beam or by penetrating the sheet with an array of hot or cold needles, or by using a water jet. When this sheet is perforated by laser ablation or the use of hot needles material originally present in the perforation site is destroyed to leave a distinct aperture. When the sheet is penetrated by a cold needle, depending upon the size of the needle, material may not be removed from the sheet during its perforation step. Thus, after the needle is removed the edges of the perforation tend to "close up". Even when material is not removed from the sheet during the formation of the perforations, the perforations are still effective since, in use, the sheet is elongated and this elongation causes the perforations to open up to provide distinct open apertures through the sheet.

When the elastic sheet is perforated, the elastic sheet can be perforated whilst in a relaxed or a substantially not elongated state or, alternatively, the sheet can be stretched or elongated during perforation. Typically, in use, the resulting elastic sheet is stretched to some degree and therefore it is possible to optimise the hole size and spacing of the perforations so that they correspond to the "in use" configuration of the resulting elastic sheet material or, alternatively, rely on the fact that the elastic sheet is going to be stretched, at least to some extent, in use and therefore rely upon the size of the perforations and/or their spacing increasing in use.

The perforations may be arranged in a completely random array with varying spacings between adjacent perforations or, alternatively the perforations may be arranged in a regular array. In the latter case the perforations may be arranged at the crossing points of a square or rectangular lattice to provide a rectilinear array. When arranged in the form of a square lattice the sides of the "square" correspond to the spacing of the adjacent perforations. Alternatively, the perforations may be arranged on a hexagonal lattice with each perforation lying in the centre of a hexagon at the apices of which are the six immediately adjacent neighbouring perforations. In this way, each perforation is equidistantly spaced from its immediate neighbours and, in this case, the spacing of the perforations corresponds to the distance between any perforation and each of its six immediately adjacent neighbouring perforations. Clearly by having the perforations arranged in a regular array it can be ensured that no weak points are generated in the sheet by the presence of unduly closely spaced adjacent perforations.

Typically the individual perforations are each made as small as reasonably possible and where material is removed from the sheet during perforation the perforations typically have an open diameter of 0.2 mm or less. The spacing between adjacent perforations is typically in a range from 0.75 to 3.2 mm with a preferred spacing of 1.6 mm. With such an arrangement a total void volume of the perforated sheet is about 3.25% by area, but it may vary between apparently zero % where the perforations "close up" when the sheet is relaxed, 1% and as much as 5% or more particularly when the sheet is elongated.

The elastic sheet may have a breathability of at least 2000 grams per square metre per day as measured by the dry cup method, described hereinafter. However, it is preferred that the breathability of the elastic sheet is higher than this and within a range from 3000 to 4000 grams per square metre per day. The breathability may be measured in an unstretched state at room temperature but it is preferably measured with the material stretched by 50% at a temperature os about 38°C and at a relative humidity of 75% to correspond with the conditions experienced in use.

In any machining operation that is carried out on an elastic sheet, anywhere the elastic sheet is crushed or in any way leaves a ragged edge, a tear initiation site is created which, when the elastic sheet is subsequently put under tension, can lead to the generation of a tear. We have found that by creating the perforations in the elastic sheet using a laser beam or hot needles it is possible to get smooth edged, clean holes that do not act as tear initiation sites. However, surprisingly, by creating the perforations using cold needles we have also found that this effect does not occur, at least not whilst the sheet is subjected to the elongation experienced in normal use.

A particular example in accordance with this invention and a breathability test method will now be described with reference to the accompanying drawings; in which:-
Figure 1 is a scrap plan view of part of a first perforated sheet with the size of perforations exaggerated;
Figure 2 is a scrap plan view of part of a second perforated sheet with the size of perforations exaggerated;
Figure 3 is a diagram of a permeability dry cup apparatus used for breathability testing,
Figure 4 is a table and the resulting graph showing how the permeability varies with hole size for a fixed percentage of material removal; and,
Figure 5 is a table showing how the permeability increases when the materials used for Figure 4 are exposed to "in use" conditions.

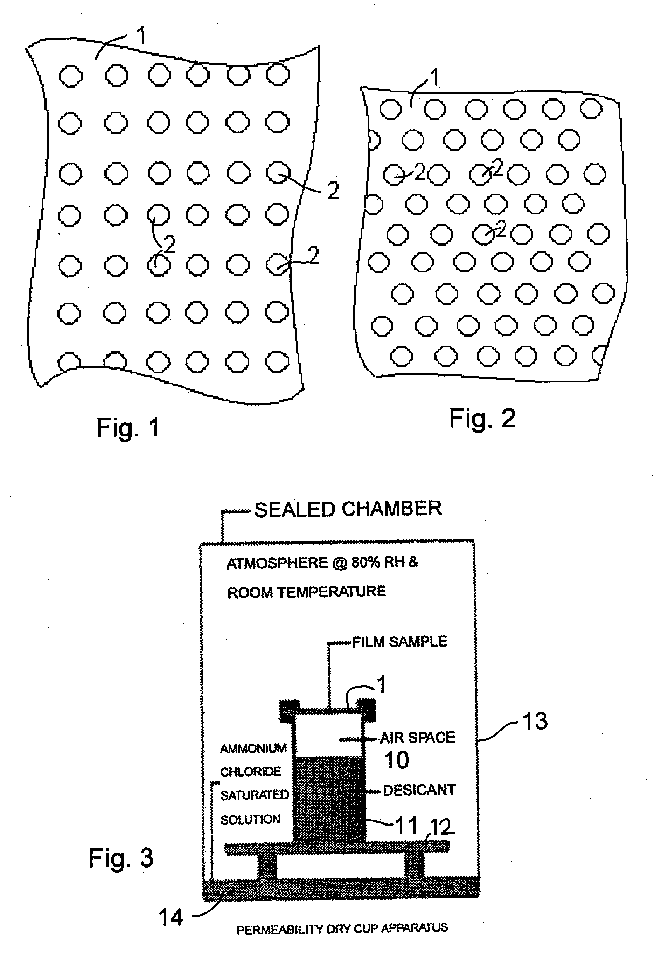

In a first example in accordance with this invention a sheet 1 of polyisoprene based elastic material is formed from a blend of 80% of polyisoprene rubber and 20% of styrene butadiene based rubber by weight having a thickness of 0.1 mm. This material is fully crosslinked and, at substantially zero elongation, is perforated using a laser machining apparatus obtained from PRECO Laser Systems LLC, of 500 Laser Drive, Somerset, Wisconsin 54025, USA. The laser system perforates the sheet 1 with holes 2 having a diameter of 0.2 mm which are arranged at intersection points of a square lattice, as shown in Figure 1, or a hexagonal lattice, as shown in Figure 2. In Figure 1 the holes 2 are separated in both the horizontal and vertical directions, as shown in Figure 1, by 1.56 mm, whereas in the arrangement shown in Figure 2 each hole 2 is separated from its six adjacent neighbouring holes 2 by 1.56 mm.

After perforation the breathability of the resulting elastic sheet is tested by the dry cup methods defined in American Standards Test Method E 96. In this method an open topped container 10 is partly filled with a desiccant 11. A sample of the sheet 1 is then placed over the open top of the container 10 and sealed to the container 10. The container 10 is then placed on a stand 12 inside a sealed chamber 13 which contains a saturated solution of ammonium chloride 14. The saturated solution of ammonium chloride provides an atmosphere inside the sealed chamber 13 having a relative humidity of 80% at room temperature.

The container 10 complete with sheet 1 and desiccant 11 is weighed before being introduced into the chamber 13 and is then left in the sealed chamber for a period of time. At the end of this period the container 10 is re-weighed to determine how much water has been taken up by the desiccant 11 and consequently, how much water vapour has passed through the sheet 1. With reference to the exposed area of the sheet 1, the period of time for which the test was carried out and the increase in weight of the container 10, it is possible to work out the moisture vapour transmission rate (MVTR) in terms of grams of water vapour per square metre of barrier per 24 hour period.

It is also possible to use moisture vapour test equipment manufactured by the company Mocon. In this test a sample of barrier material is placed between wet and dry compartments. Infrared light is used to detect water vapour passing through the barrier material. Such a test is referenced as the American Standard Test Method F 1249. Again the results are given in terms of grams per square metre per 24 hours.

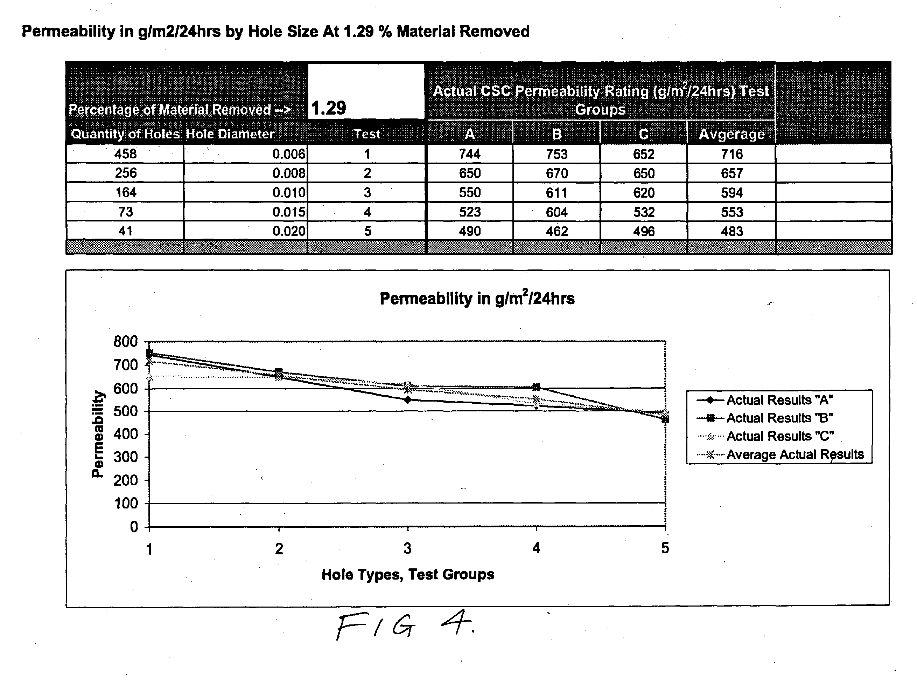

The table and graph shown in Figure 4 relate to tests carried out on five different samples. In each sample the percentage of material removed to form the perforations was 1.29% but, as can be seen in the table, the diameter (in inches) and number of holes (per square inch) varied from sample to sample. The results show that greater permeability is achieved with more smaller perforations than with less larger perforations.

It is also possible to perform the breathability test at a higher temperature, for example at body temperature of about 35°C - 40°C and with the elastic sheet stretched to a predetermined degree, for example a 50% stretch, to more closely mimic the in use condition of the elastic material.

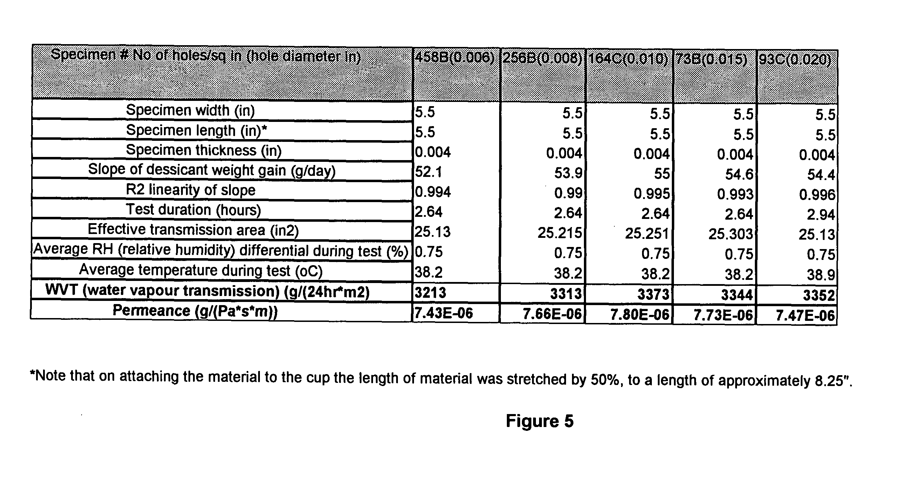

Figure 5 is a table showing the results on samples corresponding to those used in Figure 4 with a relative humidity of 75%, a temperature of 38°C and a 50% stretch. Under these conditions the breathability is considerably increased from an average of about 600 gm/m²/24 hrs to about 3300 gm/m²/24 hrs.

## Claims

1. An elastic sheet treated to provide an array of perforations through it and so provide a breathable elastic sheet.

2. An elastic sheet according to claim 1, wherein the sheet is made from a synthetic rubber containing 10 to 20% of styrene butadiene polymer and 90 to 80% of polyisoprene rubber by weight.

3. An elastic sheet according to claim 1 or 2 in which the sheet elastic material has the following properties; an elongation to break of 550 - 800%; a tensile strength of 10 - 12 MPa; and a hardness of 40 - 60 Shore.

4. An elastic sheet according to any one of the preceding claims, having a gauge or thickness in a range of 0.05 mm to 0.3 mm.

5. An elastic sheet according to any one of the preceding claims, in which the perforations are arranged in a regular array.

6. An elastic sheet according to any one of the preceding claims, in which the perforations have an open diameter of 0.2 mm or less.

7. An elastic sheet according to any one of the preceding claims, in which the breathability of the elastic sheet is within a range from 3000 to 4000 grams per square metre per day.

8. A method of treating an elastic sheet material comprising providing an array of perforations through it to provide a breathable elastic sheet.

9. A method of treating an elastic sheet according to claim 8, in which the elastic sheet is treated to provide the perforations before, during, or after a slitting process to form elastic tape from the sheet.

10. A method of treating an elastic sheet according to claim 8 or 9, in which the perforations are formed by ablation using a laser beam or by penetrating the sheet with an array of hot or cold needles, or by using a water jet.
